(19) Europäisches Patentamt
European Patent Office
Office européen des brevets

(11) Veröffentlichungsnummer: **0 235 636**
**B1**

# (12) EUROPÄISCHE PATENTSCHRIFT

(45) Veröffentlichungstag der Patentschrift: **18.04.90**

(51) Int. Cl.⁴: **C08F 36/18,** C08F 2/22

(21) Anmeldenummer: **87101977.4**

(22) Anmeldetag: **12.02.87**

## (54) Verfahren zur Polymerisation von Chloropren.

(30) Priorität: **19.02.86 DE 3605331**

(43) Veröffentlichungstag der Anmeldung:
**09.09.87 Patentblatt 87/37**

(45) Bekanntmachung des Hinweises auf die Patenterteilung:
**18.04.90 Patentblatt 90/16**

(84) Benannte Vertragsstaaten:
**DE FR GB**

(56) Entgegenhaltungen:
**EP-A- 0 065 206**
**DE-A- 2 650 342**
**FR-A- 2 318 179**
**FR-A- 2 528 857**

(73) Patentinhaber: **BAYER AG,**
**D-5090 Leverkusen 1 Bayerwerk(DE)**

(72) Erfinder: **Musch, Rüdiger, Dr.,**
**Altenberger-Dom-Strasse 169,**
**D-5060 Bergisch-Gladbach 2(DE)**
Erfinder: **Müller, Eberhard, Dr., Pfauenstrasse 19,**
**D-4047 Dormagen 1(DE)**
Erfinder: **Konter, Wolfgang, Dr., Espenstrasse 49,**
**D-4040 Neuss 21(DE)**
Erfinder: **Hohmann, Gerhard, Dr., An der Steinrütsch 35,**
**D-5090 Leverkusen 1(DE)**
Erfinder: **Mott, Ludwig, Dr., Karl-Jasper-Strasse 97,**
**D-5090 Leverkusen 1(DE)**

**EP 0 235 636 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur kontinuierlichen Emulsionspolymerisation von Chloropren unter Verwendung bestimmter Emulgatoren.

Es ist bekannt, die Polymerisation von Chloropren in Gegenwart von anionisch aktiven Emulgatoren auf der Basis von Alkalisalzen der disproportionierten Abietinsäure und von Kondensationsprodukten aus Naphthalinsulfonsäuren und Formaldehyd durchzuführen.

Bei der üblichen Aufarbeitung durch Ausfrieren werden die oberflächenaktiven Emulgatoren teilweise aus dem Polymer entfernt und gelangen in das Abwasser. Sind die Emulgatoren biologisch nicht abbaubar, müssen teurere Verfahren verwendet werden, um das Wasser wieder aufzubereiten.

Die üblicherweise als Zweitemulgator verwendeten Kondensationsprodukte aus Naphthalinsulfonsäure und Formaldehyd vermeiden zwar eine ganze Reihe von Nachteilen, die andere Emulgatoren zeigen,
- Bildung von unlöslichen Polymerisaten,
- erhebliche Schaumbildung bei der Entfernung des restlichen Monomeren in der Entgasung,
- ungenügende oder zu starke Polymerhaftung im Trocknungsaggregat,
- Verschlechterung von Produkteigenschaften wie Verringerung der Topfzeit bei Klebstoffrohstoffen,

haben aber zwei gravierende Nachteile.

Zum einen sind diese Produkte biologisch nicht abbaubar, zum anderen bewirken sie eine gewisse Verfärbung des Polymeren während der Trocknung, wodurch seine Verwendung als Klebstoff für helle Werkstoffe unmöglich wird.

Es wurde nun gefunden, daß sich mit bestimmten Alkylbenzolsulfonaten als Zweitemulgator diese Nachteile vermeiden lassen, ohne daß gravierende Änderungen der übrigen Eigenschaften auftreten.

Gegenstand der Erfindung ist daher ein Verfahren zur kontinuierlichen Polymerisation von Chloropren und gegebenenfalls bis zu 20 Gew.-%, bezogen auf Monomermischung, eines oder mehrerer mit Chloropren copolymerisierbarer Monomere in wäßriger alkalischer Emulsion in Gegenwart von Emulgatoren und Initiatoren bei 0 bis 60° C, dadurch gekennzeichnet, daß als Emulgator ein Gemisch aus 2,0 bis 5,0 Gew.-% eines Salzes der disproportionierten Abietinsäure und 0,1 bis 1,0 Gew.-%, jeweils bezogen auf Gesamtmonomermenge, einer Verbindung der Formel

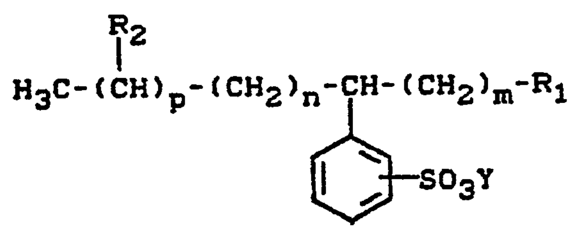

worin
$R_1$ und $R_2$ unabhängig voneinander Wasserstoff oder $CH_3$,
m eine Zahl von 0 bis 14,
n eine Zahl von 0 bis 13,
p eine Zahl von 0 bis 2 und
Y Wasserstoff, Na oder K bedeuten und
die Gesamtzahl der aliphatischen Kohlenstoffatome 11 bis 15 beträgt,
verwendet wird.

Vorzugsweise werden zusätzlich 0,001 bis 0,1 Gew.-%, bezogen auf Gesamtmonomere, eines Kohlenwasserstoffes, der aromatische ($C_A$), naphthenische ($C_N$) und paraffinische ($C_P$) Kohlenstoffatome in einer Konzentration von $C_A$ 20 -50 %, $C_N$ 0 - 40 % und $C_P$ 40 - 80 % enthält und ein Molgewicht von 180 bis 750 hat, zugesetzt. Bevorzugt sind solche Kohlenwasserstoffe, deren $C_A$ 30 - 40 %, $C_N$ 0 - 10 % und $C_P$ 60 - 70 % beträgt. Durch den Zusatz läßt sich die Konfektionsklebrigkeit gezielt auf das jeweils gewünschte Maß einstellen.

Die Bestimmung von $C_A$, $C_N$ und $C_P$ erfolgt nach J.C. Vlugter et al, J. Instn. Petrol. 18 (1932), Seite 735.

Bevorzugte Polymerisationsinitiatoren sind Formamidinsulfinsäure, Kaliumperoxodisulfat, Mischungen aus Formamidinsulfinsäure und Kaliumoxodisulfat, Mischungen aus Kaliumperoxodisulfat und Natrium-β-anthrachinonsulfonat oder Mischungen von Formamidinsulfinsäure, Kaliumperoxodisulfat und Natrium-β-anthrachinonsulfonat sowie Kombinationen der vorstehend genannten Initiatoren und Initiatormischungen mit Natriumdithionit oder Natriumdithionit allein.

Die Monomeren werden je nach vorgesehener Anwendung des Polymeren zu 50 bis 99 % umgesetzt, wobei für Festkautschuke zur Erzielung vorteilhafter anwendungstechnischer Werte Umsätze zwischen 60 und 70 % angemessen sind, während Latices, die zur Papierverfestigung oder zur Bitumenvergütung benötigt werden, mit einem hohen Umsatz bis zu 99 %, vorzugsweise 85 bis 99 %, hergestellt werden.

Geeignete Comonomere sind z.B. Acrylnitril, Methacrylnitril, Acrylsäureester, Methacrylsäureester, Vinylidenchlorid, Styrol, Vinyltoluole, Butadien-(1,3), 1-Chlorbutadien-(1,3), 2,3-Dichlorbutadien-(1,3), 2-Chlor-3-Methylbutadien-(1,3) und Schwefel, wobei Schwefel und 2,3-Dichlorobutadien-(1,3) bevorzugt sind.

Durch Zugabe bekannter, als Regler wirksamer Verbindungen, z.B. Mercaptane, lassen sich die Struktur und die Eigenschaften der Polymeren in weiten Grenzen variieren.

In einer bevorzugten Ausführungsform, insbesondere wenn gelfreie Polymerisate hergestellt werden sollen, werden Regler zugesetzt und zwar gestaffelt zu Polymerisationsbeginn und während der Polymerisation.

Bevorzugte Kettenübertragungsmittel sind aliphatische Mercaptane, insbesondere solche mit 8 bis 18 Kohlenstoffatomen. Die Mercaptane können geradkettig oder verzweigt sein. So können primäre, sekundäre und tertiäre Mercaptane verwendet werden, das bevorzugteste Mercaptan ist jedoch n-Dodecylmercaptan. Auch andere bekannte Kettenübertragungsmittel, beispielsweise aromatische Disulfide oder Alkylxanthogendisulfide mit 1 bis 12 Kohlenstoffatomen in der Alkylgruppe oder heterocyclische Ringverbindungen an Stelle der Alkylgruppen wie Bis-(5-ethyl-1,3-dioxan-5-ylmethyl)-xanthogendisulfid können verwendet werden.

Nicht umgesetzte organische Verbindungen lassen sich nach der Reaktion durch Wasserdampfdestillation, beispielsweise bei 50° C und einem absoluten Druck von 20 Torr entfernen.

Die in den folgenden Beispielen beschriebenen Polymerisationsversuche wurden zur Erzielung besonders definierter Reaktionsbedingung in einer kontinuierlich betriebenen 6 Kessel-Kaskade betrieben.

Diese kontinuierliche Polymerisation von Chloropren ist aus den US-Patentschriften 2 384 277, 2 394 291 und 2 831 842 bekannt.

Das Monomere, inclusive Stabilisator und Regler, wurde in der Emulgator und Ätznatron enthaltenden wäßrigen Phase voremulgiert und gelangte dann in das Reaktionsgefäß, in das zusätzlich der Initiator eindosiert wurde. Analoge Ergebnisse der Polymerisation wurden auch dann erhalten, wenn ohne Voremulgierung gearbeitet wurde.

Nach dem Austritt aus der Rührkesselkaskade wurde die Reaktion durch Zugabe von t-Butylbrenzcatechin bzw. Diethylhydroxylamin und gleichzeitigem Entzug des Monomeren abgebrochen. Der pH-Wert des alkalischen Latex wurde durch verdünnte Essigsäure auf pH 6,5 gesenkt und das Polymere aus dieser Emulsion durch Gefrierkoagulation isoliert und getrocknet (Chem, Engng. Progr. 43, 391 (1974), DE-PS 1 051 506).

Bei diesem bekannten Verfahren koaguliert der Latex auf einer in dem Latex sich drehenden gekühlten Walze. Die auf der Walzenoberfläche entstandene eishaltige Kautschukfolie wird abgehoben und über ein Waschband geführt, wo das Eis wieder aufgetaut wird. Die nasse Folie läuft anschließend durch Quetschrollen, wird teilweise entwässert und gelangt mit einem Wassergehalt von etwa 30 Gew.-% in den Etagentrockner. Dort durchläuft das Polymerband, jeweils über Umlenkrollen geleitet, mehrere übereinanderliegende Etagen, wo es mit Heißluft getrocknet wird. Die Folie verläßt anschließend den Trockner, wird zu einem Strang zusammengeführt und in gewünschte Teilstücke geschnitten.

1. Vergleichsbeispiel

In den ersten Reaktor einer Polymerisationskaskade, bestehend aus 6 gleichen Reaktoren mit einem Volumen von je 50 Liter wurden die wäßrige Phase (W) und die Monomerphase (M) über eine Meß- und Regelapparatur in stets konstantem Verhältnis eingefahren. Die mittlere Verweilzeit je Kessel betrug 30 Minuten. Die Aktivatorphase A wurde im 2. Reaktor (1. Polymerisationskessel) zudosiert. Die Reaktion erfolgte in Gegenwart von Luft. Die Zahlenangaben sind Gewichtsteile pro Zeiteinheit. Die tatsächlichen Mengen ergeben sich aus der Rezeptur, den Dichten der einzelnen Phasen, dem Reaktorvolumen, der geflutet gefahren wurde, und der mittleren Verweilzeit.

| **(M) = Monomerphase:** | |
|---|---|
| Chloropren | 100,0 |
| n-Dodecylmercaptan | 0,13 |
| Phenothiazin | 0,015 |

| (W) = wäßrige Phase: | |
|---|---|
| Entsalztes Wasser | 140,0 |
| Natriumsalz einer disproportionierten Abietinsäure | 6,0 |
| Natriumsalze eines Kondensationsproduktes aus Naphthalinsulfonsäure und Formaldehyd | 0,7 |
| Ätznatron | 0,63 |

| (A) = Aktivatorphase: | |
|---|---|
| 3 gew.-%ige wäßrige Formamidinsulfinsäurelösung | 0,060 |
| 3 gew.-%ige wäßrige Kaliumperoxodisulfatlösung | 0,070 |

(Bei einer Innentemperatur von 14° C sprang die Reaktion im 1. Polymerisationskessel an. Durch eine Außenkühlung wurde die freiwerdende Polymerisationswärme abgeführt und die Polymerisationstemperatur auf 10° C erniedrigt. Entsprechend dem Zulauf in den ersten Kessel durchläuft das Reaktionsgemisch die Rührkesselkaskade. Bei einem Monomerumsatz von 66 % wurde die Reaktion durch Zugabe von Diethylhydroxylamin abgebrochen. Das restliche Monomere wurde durch Wasserdampfdestillation aus dem Polymeren entfernt und der Polymerlatex nach Senken des pH-Wertes auf 6,5 auf einer Kühlwalze koaguliert und isoliert. Die Mooney-Viskosität ML-4 des Polymeren lag bei 98 ME (Versuch A).

2. und 3. Vergleichsbeispiel

Es wurde wie im 1. Vergleichsbeispiel polymerisiert, jedoch wurde die Sulfonsäure durch äquimolare Mengen an Laurylsulfat bzw. einem sekundären Alkylsulfonat ersetzt. Die Ergebnisse sind der folgenden Tabelle zu entnehmen (Versuche B und C).

1. und 2. Beispiel

Man polymerisierte wie im 1. Vergleichsbeispiel, jedoch an Stelle der Sulfonsäure mit äquimolarer Menge an n-Dodecylbenzolsulfonat allein und under Zusatz eines Kohlenwasserstoffs (Gew.-Verhältnis 100:2) mit einem $C_A$-Wert von 34,5 und einem $C_P$-Wert von 65,5. Die Ergebnisse sind der folgenden Tabelle zu entnehmen (Versuche D und E).

A) Bestimmung der Polymerfarbe

Zur Beurteilung der Farbe werden die Polymeren in Toluol gelöst (20 Gew.-%) und die Farbe der Lösung nach den Musterkarten RAL (Ausschusses für Lieferbedingungen und Gütesicherung beim Deutschen Normenausschuß (DNA), 6 Frankfurt/M. 1 Gutleutstr. 163-167) zugeordnet.
Die in Tabelle 1 angegebenen Zahlen entsprechen folgenden RAL-Farbtönen:

| Nr. | RAL-Nr. | Farbe |
|---|---|---|
| 3 | 9002 | Grauweiß |
| 2 | 1013 | Perlweiß |
| 1 | 9001 | Cremeweiß |
| 0 | 9010 | Reinweiß |

Der Weißgrad nimmt von Nr. 3 nach Nr. 0 zu.

B) Bestimmung der Kontaktklebzeit einer Klebstofflösung

Herstellung der Klebstofflösung:

In einer 25-ml Weithalsflasche mit Schraubverschluß wurden 33 g Polymer in 117 g eines Lösungsmittelgemisches, bestehend aus Ethylacetat/Benzin mit den Siedegrenzen 65/95° C und Toluol im Gewichtsverhältnis 2:2:1, unter Rühren gelöst. Dazu wurde das Polymere in Stücke von 5 mm Durchmesser geschnitten. Das Lösen erfolgte unter Verschluß (durchbohrter Schraubdeckel) innerhalb von 16 h bei 300 Upm.

Durchführung der Messung

Bei Normalklima (23° C/50 % Luftfeuchtigkeit) werden mit einer Schablone aus Kunstdruckkarton holzfrei von 246 g/m² und einer Stärke von 0,32 mm und einem Filmziehgerät auf Karteikarton holzfrei (250 g/m²) 5 mm breite und 0,32 mm dicke Klebstoffilme in einer Länge von ca. 300 mm aufgetragen.
Aus diesen Proben werden in Zeitabständen von 3 min. ca. 30 mm lange Klebfilme ausgeschnitten und jeweils zwei gekreuzt auf den Stempel einer Apparatur gebracht, so daß eine Klebfläche von 0,25 cm² entsteht. Diese wird 10 sec konstant mit 50 g belastet.
Die Kontaktklebzeit ist beendet, wenn die Klebfilme nach dem Entfernen aus der Apparatur nicht mehr aneinander haften.

| Versuch | Kontaktklebezeit (min) |
|---|---|
| A | 60 |
| B | 15 |
| C | 18 |
| D | 51 |
| E | 63 |

Tabelle

| Versuche | biologischer Abbau des Emulgators (%) | Monomer-Umsatz (%) | Polymer-viskosität (ME) | Polymer-farbe | Verhalten im Trockner | Bemerkungen |
|---|---|---|---|---|---|---|
| A | 0 | 66 | 98 | 3 | einwandfrei | – |
| B | >90 | 68 | 102 | 2 | flattert | Strangbildung unbefriedigend |
| C | 66 | 64 | 96 | 1 | flattert | Färbung ungleichmäßig (Zwiebelstruktur) |
| D | >90 | 68 | 95 | 0 | einwandfrei (leichtes Kleben) | – |
| E | >90 | 67 | 97 | 0 | einwandfrei | – |

## Patentansprüche

1. Verfahren zur kontinuierlichen Polymerisation von Chloropren und gegebenenfalls bis zu 20 Gew.-%, bezogen auf Monomermischung, eines oder mehrerer mit Chloropren copolymerisierbarer Monomere in wäßriger alkalischer Emulsion in Gegenwart von Emulgatoren und Initiatoren bei 0 bis 60° C, dadurch gekennzeichnet, daß als Emulgator ein Gemisch aus 2,0 bis 6,0 Gew.-% eines Salzes der disproportionierten Abietinsäure und 0,1 bis 1,0 Gew.-%, jeweils bezogen auf Gesamtmonomermenge, einer Verbindung der Formel

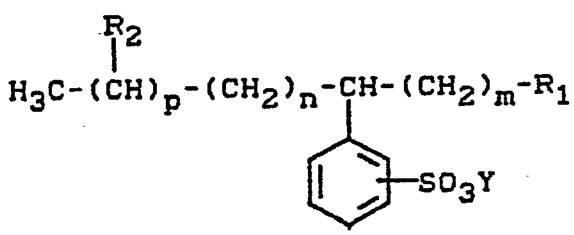

worin
$R_1$ und $R_2$ unabhängig voneinander Wasserstoff oder $CH_3$,
m eine Zahl von 0 bis 14,
n eine Zahl von 0 bis 13,
p eine Zahl von 0 bis 2 und
Y Wasserstoff, Na oder K bedeuten und
die Gesamtzahl der aliphatischen Kohlenstoffatome 11 bis 15 beträgt,
verwendet wird.

2. Verfahren nach Anspruch 1, dadurch gekennzeichnet, daß die Polymerisation zusätzlich in Gegenwart von 0,001 bis 0,1 Gew.-%, bezogen auf Gesamtmonomere, eines Kohlenwasserstoffes, der aromatische ($C_A$), naphthenische ($C_N$) und paraffinische ($C_P$) Kohlenstoffatome in einer Konzentration von $C_A$ 20 –50 %, $C_N$ 0 – 40 % und $C_P$ 40 – 80 % enthält und ein Molgewicht von 180 bis 750 hat, durchgeführt.

## Claims

1. A process for the continuous polymerisation of chloroprene and optionally up to 20% by weight, based on the monomer mixture, of one or more monomers capable of copolymerisation with chloroprene, in an aqueous alkaline emulsion in the presence of emulsifiers and initiators at 0°C to 60°C, characterised in that the emulsifier used is a mixture of from 2. 0 to 6. 0% by weight of a salt of disproportionated abietic acid and from 0. 1 to 1. 0% by weight, based in each case on the total quantity of monomers, of a compound corresponding to the following formula

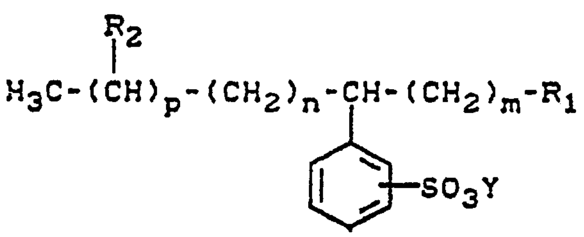

wherein
$R_1$ and $R_2$ denote, independently of one another, hydrogen or $CH_3$,
m denotes a number from 0 to 14,
n denotes a number from 0 to 13,
p denotes a number from 0 to 2 and
Y denotes hydrogen, Na or K and the total number of aliphatic carbon atoms is from 11 to 15.

2. A process according to claim 1, characterised in that the polymerisation is in addition carried out in the presence of from 0. 001 to 0. 1% by weight, based on the total quantity of monomers of a hydrocarbon containing aromatic ($C_A$), naphthenic ($C_N$) and paraffinic ($C_P$) carbon atoms at a concentration of $C_A$ 20 – 50%, $C_N$ 0 – 40% and $C_P$ 40 – 80% and having a molecular weight of from 180 to 750.

## Revendications

1. Procédé de polymérisation en continu du chloroprène et éventuellement de jusqu'à 20% en poids par rapport au mélange des monomères, d'un ou plusieurs monomères copolymérisables avec le chloroprène en émulsion alcaline aqueuse en présence d'émulsifiants et d'amorçeurs entre 0 et 60°C, caractérisé en ce que l'on utilise comme émulsifiant un mélange de 2 à 6% en poids d'un sel de l'acide abiétique dismuté et de 0,1 à 1,0% en poids, à chaque fois par rapport à la quantité globale de monomère, d'un composé de formule

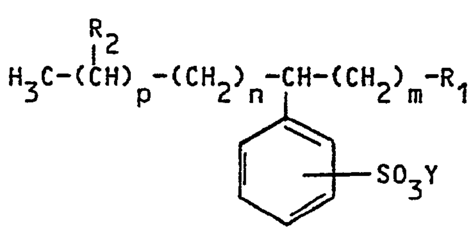

dans laquelle
$R_1$ et $R_2$ représentent indépendamment l'un de l'autre l'hydrogène ou $CH_3$,
m est un nombre de 0 à 14,
n est un nombre de 0 à 13,
p est un nombre de 0 à 2 et
Y représente l'hydrogène, Na ou K et le nombre total des atomes de carbone aliphatiques est de 11 à 15.

2. Procédé selon la revendication 1, caractérisé en ce que l'on effectue la polymérisation en outre en présence de 0,001 à 0,1% en poids, par rapport aux monomères totaux, d'un hydrocarbure qui contient des atomes de carbone aromatiques ($C_A$), naphténiques ($C_N$) et paraffiniques ($C_P$) en une concentration de 20 à 50% de $C_A$, de 0 à 40% de $C_N$ et de 40 à 80% de $C_P$ et qui présente un poids moléculaire de 180 à 750.